# EUROPÄISCHE PATENTSCHRIFT

(11) **EP 1 370 916 B1**
(45) Veröffentlichungstag und Bekanntmachung des Hinweises auf die Patenterteilung: **28.06.2006**
(21) Anmeldenummer: 02726058.7
(22) Anmeldetag: 11.03.2002
(51) Int. Cl.: G05B 19/418, H04L 29/06

(54) **ANWENDUNGEN EINES SCHALTBAREN DATENNETZES FÜR ECHTZEIT- UND NICHTECHTZEITKOMMUNIKATION**
APPLICATION OF A SWITCHABLE DATA NETWORK FOR REAL TIME AND NON-REAL TIME COMMUNICATION
APPLICATIONS D'UN RESEAU DE DONNEES COMMUTABLE POUR COMMUNICATION EN TEMPS REEL ET NON REEL

(30) Priorität: 16.03.2001 DE 10113398; 26.09.2001 DE 10147421
(43) Veröffentlichungstag der Anmeldung: 17.12.2003
(73) Patentinhaber: SIEMENS AKTIENGESELLSCHAFT, 80333 München (DE)
(72) Erfinder: FRANKE, Michael, 91056 Erlangen (DE); KIESEL, Martin, 91099 Poxdorf (DE); ROSSI, Gernot, 91245 Simmelsdorf (DE)
(86) Internationale Anmeldenummer: PCT/DE2002/000851
(87) Internationale Veröffentlichungsnummer: WO 2002/075465

(56) Entgegenhaltungen:
- WO-A-00/28400
- WO-A-01/05120
- WO-A-94/14255
- DE-A- 19 758 203
- US-A- 6 032 208
- US-A- 6 104 696
- MONTEIRO F ET AL: "Teleoperating a mobile robot. A solution based on JAVA language" INDUSTRIAL ELECTRONICS, 1997. ISIE '97., PROCEEDINGS OF THE IEEE INTERNATIONAL SYMPOSIUM ON GUIMARAES, PORTUGAL 7-11 JULY 1997, NEW YORK, NY, USA,IEEE, US, 7. Juli 1997 (1997-07-07), Seiten SS263-SS267, XP010265177 ISBN: 0-7803-3936-3

## Beschreibung

Die Erfindung betrifft Anwendungen eines schaltbaren Datennetzes, welches innerhalb eines Übertragungszyklus Echtzeit- und Nicht-Echtzeitkommunikation zulässt. Ein derartiges Netzwerk ist aus der DE 19710971 A1 bekannt.

Aus der US-A-5923660 ist ein geschaltetes Ethernet-Datennetz bekannt. Ein solches Datennetz basiert auf einem so genannten Netzwerk Switch, der verschiedene Teilnehmer des Datennetzes durch Punkt-zu-Punkt Verbindungen miteinander verknüpfen kann. Die Kommunikation auf dem Datennetz erfolgt mittels Datenpaketen. Ein Datenpaket kann dabei an nur einen Teilnehmer, an mehrere Teilnehmer oder an alle Teilnehmer des Datennetzes verschickt werden, wobei man im letzteren Fall von "Broadcast" spricht.

Ein schaltbares Datennetz ist im Allgemeinen dadurch gekennzeichnet, dass ein Teilnehmer alle anderen Teilnehmer des schaltbaren Datennetzes nur indirekt durch entsprechende Weiterleitung der zu übertragenden Daten mittels eines oder mehrerer Koppeleinheiten erreichen kann. Die einzelnen für den Aufbau einer entsprechenden Kommunikationsverbindung erforderlichen Verbindungen zwischen je zwei Teilnehmern des Datennetzes bezeichnet man als Punkt-zu-Punkt Verbindungen.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei im weiteren synonym zur oben erwähnten Übertragung von Datentelegrammen oder Datenpaketen verwendet.

Die Vernetzung selbst wird beispielsweise bei schaltbaren Hochleistungsdatennetzen, insbesondere Ethernet, dadurch gelöst, dass zwischen zwei Teilnehmern jeweils mindestens eine Koppeleinheit geschaltet ist, die mit beiden Teilnehmern verbunden ist. Jede Koppeleinheit kann mit mehr als zwei Teilnehmern verbunden sein. Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder andere Maschinen, die elektronische Daten mit anderen Maschinen austauschen, insbesondere verarbeiten.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt. Gemäß IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Ebenso ist an sich aus dem Stand der Technik bekannt in einem solchen Automatisierungssystem ein synchrones, getaktetes Kommunikationssystem mit Äquidistanz-Eigenschaften zu verwenden. Hierunter versteht man ein System aus wenigstens zwei Teilnehmern, die über ein Datennetz zum Zweck des gegenseitigen Austausches von Daten bzw. der gegenseitigen Übertragung von Daten miteinander verbunden sind.

Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein-/ Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im folgenden Regler-, Antriebe oder Steuerungseinheiten jeglicher Art verstanden. Als Datennetze werden beispielsweise Bussysteme wie z.B. Feldbus, Profibus, Ethernet, Industrial Ethernet, FireWire oder auch PC-interne Bussysteme (PCI), etc. verwendet.

Automatisierungskomponenten (z.B. Steuerungen, Antriebe,...) verfügen heute im Allgemeinen über eine Schnittstelle zu einem zyklisch getakteten Kommunikationssystem. Eine Ablaufebene der Automatisierungskomponente (Fast-cycle) (z.B. Lageregelung in einer Steuerung, Drehzahl-, Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Aus dem Stand der Technik bekannte Systemkomponenten nutzen zur Kommunikation für jede Prozess- bzw. Automatisierungsebene nur ein Kommunikationssystem bzw. einen Kommunikationszyklus (Fast-cycle) in dessen Takt alle relevanten Informationen übertragen werden. Daten, die nur im Slow-cycle benötigt werden, können z.B. über zusätzliche Protokolle gestaffelt übertragen werden, um die Anforderungen an die Bandbreite zu begrenzen. Das bedeutet zusätzlichen Softwareaufwand in den Automatisierungskomponenten. Weiterhin wird sowohl die Busbandbreite als auch der minimal mögliche Kommunikationszyklus im gesamten System durch die niederperformanteste Komponente bestimmt.

In der DE 100 58 524.8 ist ein System und Verfahren zur parallelen Übertragung von echtzeitkritischen und nicht echtzeitkritischen Daten offenbart. Ein solches System weist Mittel zur Übertragung von Daten in wenigstens einem Übertragungszyklus mit einstellbarer Zeitdauer auf, wobei jeder Übertragungszyklus in wenigstens einen ersten Bereich zur Übertragung von echtzeitkritischen Daten zur Echtzeitsteuerung und wenigstens einen zweiten Bereich zur Übertragung von nicht echtzeitkritischen Daten unterteilt ist.

Für eine Anwendung eines solchen Systems wird davon ausgegangen, dass eine offene, internetbasierte Kommunikation spontane Kommunikation ist, dass heißt, dass sowohl Zeitpunkt solcherart Kommunikation als auch die anfallende Datenmenge, die dabei zu transferieren ist, nicht vorher bestimmbar ist. Dadurch sind Kollisionen auf den Übertragungsleitungen bei Bussystemen bzw. in den Koppeleinheiten bei schaltbaren Hochgeschwindigkeitsnetzen, insbesondere Fast Ethernet oder Switched Ethernet, nicht auszuschließen.

Um die Vorteile der Internetkommunikationstechnologie auch bei der Echtzeitkommunikation in schaltbaren Datennetzen im Bereich der Automatisierungstechnik, insbesondere der Antriebstechnik nutzen zu können, ist ein Mischbetrieb von Echtzeitkommunikation mit sonstiger spontaner, nicht echtzeitkritischer Kommunikation, insbesondere Internetkommunikation wünschenswert. Dies wird dadurch möglich, dass die Echtzeitkommunikation, die in den hier betrachteten Anwendungsgebieten vorwiegend zyklisch auftritt und somit im Voraus planbar ist, von der im Gegensatz dazu nicht planbaren, nicht - echtzeitkritischen Kommunikation, insbesondere der offenen, internetbasierten Kommunikation strikt getrennt wird.

Die Kommunikation zwischen den Teilnehmern erfolgt dabei in Übertragungszyklen, wobei jeder Übertragungszyklus in wenigstens einen ersten Bereich zur Übertragung von echtzeitkritischen Daten zur Echtzeitsteuerung, beispielsweise der dafür vorgesehenen industriellen Anlagen und wenigstens einen zweiten Bereich zur Übertragung von nicht echtzeitkritischen Daten, beispielsweise bei der offenen, internetfähigen Kommunikation unterteilt ist. Eine besonders vorteilhafte Ausgestaltung eines solchen Systems ist dabei dadurch gekennzeichnet, dass jedem Teilnehmer eine Koppeleinheit zugeordnet ist, die zum Senden und/oder zum Empfangen und/oder zur Weiterleitung der zu übertragenden Daten vorgesehen ist.

Eine außerordentlich vorteilhafte Ausgestaltung eines solchen Systems ist dadurch gekennzeichnet, dass alle Teilnehmer und Koppeleinheiten des schaltbaren Datennetzes durch Zeitsynchronisation untereinander stets eine gemeinsame synchrone Zeitbasis aufweisen. Dies ist Voraussetzung für eine Trennung der planbaren Echtzeitkommunikation von der nicht planbaren, nicht echtzeitkritischen Kommunikation. Die Trennung der planbaren Echtzeitkommunikation und der nicht planbaren, nicht echtzeitkritischen Kommunikation wird durch Anwendung des Verfahrens zur Zeitsynchronisation gemäß der nicht vorveröffentlichten Anmeldung DE 10004425.5 gewährleistet.

Durch permanente Anwendung dieses Verfahrens auch im laufenden Betrieb eines verteilten Automatisierungssystems sind alle Teilnehmer und Koppeleinheiten des schaltbaren Datennetzes stets auf eine gemeinsame Zeitbasis synchronisiert, was infolgedessen gleicher Startpunkt und gleiche Länge jedes Übertragungszyklus für alle Teilnehmer und Koppeleinheiten bedeutet.

Da alle echtzeitkritischen Datenübertragungen durch den zyklischen Betrieb vor der eigentlichen Datenübertragung bekannt sind und deshalb im Voraus geplant werden können, ist sichergestellt, dass für alle Teilnehmer und Koppeleinheiten die Echtzeitkommunikation so gesteuert werden kann, dass keine Störungen, beispielsweise Kollisionen, bei der Datenübertragung der echtzeitkritischen Datentelegramme selbst auftreten und alle geplanten kritischen Datentransferzeitpunkte exakt eingehalten werden.

Eine weitere besonders vorteilhafte Ausgestaltung eines solchen Systems ist dadurch gekennzeichnet, dass alle nicht echtzeitkritischen Daten, die während des, für die echtzeitkritische Kommunikation vorgesehenen Bereichs eines Übertragungszyklus übertragen werden sollen, von der jeweiligen Koppeleinheit zwischengespeichert und während des, für die nicht echtzeitkritische Kommunikation vorgesehenen Bereichs dieses oder eines folgenden Übertragungszyklus übertragen werden, dass heißt, eine im ersten Bereich eines Übertragungszyklus, der für die Echtzeitkommunikation reserviert ist, möglicherweise auftretende, nicht geplante Internetkommunikation wird in den zweiten Bereich des Übertragungszyklus, der für die spontane, nicht echtzeitkritische Kommunikation vorbehalten ist, verschoben, wodurch Störungen der Echtzeitkommunikation vollständig vermieden werden.

Die entsprechenden Daten der spontanen, nicht echtzeitkritischen Kommunikation werden dabei von der jeweils betroffenen Koppeleinheit zwischengespeichert und nach Ablauf des Bereichs für die Echtzeitkommunikation erst im zweiten Bereich des Übertragungszyklus, der für die spontane, nicht echtzeitkritische Kommunikation vorbehalten ist, gesendet. Dieser zweite Bereich, d.h. die gesamte Zeitdauer bis zum Ende des Übertragungszyklus, steht allen Teilnehmern für die nicht planbare, nicht echtzeitkritische Kommunikation, insbesondere Internetkommunikation zur Verfügung, ebenfalls ohne die Echtzeitkommunikation zu beeinflussen, da diese zeitlich getrennt durchgeführt wird.

Kollisionen mit den echtzeitkritischen Datentelegrammen in den Koppeleinheiten können dadurch vermieden werden, dass alle nicht echtzeitkritischen Daten, die während des, für die Übertragung der nicht echtzeitkritischen Daten vorgesehenen Bereichs eines Übertragungszyklus nicht übertragen werden können, von der jeweiligen Koppeleinheit zwischengespeichert und während des, für die Übertragung der nicht echtzeitkritischen Daten vorgesehenen Bereichs eines späteren Übertragungszyklus übertragen werden.

Eine weitere vorteilhafte Ausgestaltung eines solchen Systems ist dadurch gekennzeichnet, dass für alle zu übertragenden, echtzeitkritischen Datentelegramme Sende- und Empfangszeitpunkt bei Sender und/oder Empfänger und in allen jeweils beteiligten Koppeleinheiten alle Zeitpunkte für die Weiterleitung der echtzeitkritischen Datentelegramme sowie die jeweils zugehörigen Verbindungsstrecken, über die die echtzeitkritischen Datentelegramme weitergeleitet werden, vor Beginn der jeweiligen Durchführung der Datenübertragung vermerkt sind, d.h. es ist in einer Koppeleinheit vermerkt, wann und an welchen Ausgangsport ein zum Zeitpunkt X ankommendes echtzeitkritisches Datentelegramm weiter gesendet werden soll.

Eine weitere überaus vorteilhafte Ausgestaltung eines solchen Systems ist dadurch gekennzeichnet, dass die Weiterleitungszeitpunkte so geplant sind, dass jedes echtzeitkritische Datentelegramm spätestens zum Weiterleitungszeitpunkt oder früher bei der entsprechenden Koppeleinheit ankommt, es aber auf jeden Fall erst zum Weiterleitungszeitpunkt weitergesendet wird.

Damit ist das Problem von Zeitunschärfen, das sich insbesondere bei langen Übertragungsketten bemerkbar macht, eliminiert. Dadurch können die echtzeitkritischen Datentelegramme unmittelbar, ohne zeitlichen Zwischenraum gesendet bzw. weitergeleitet werden, d.h. eine schlechtere Nutzung der Bandbreite bei Echtzeitdatenpaketen wird vermieden. Selbstverständlich ist es aber auch möglich bei Bedarf Sendepausen zwischen der Übertragung der einzelnen Datenpakete einzubauen.
Ein weiterer Vorteil der zeitbasierten Weiterleitung ist, dass die Zielfindung in der Koppeleinheit nicht mehr adressbasiert ist, weil von vornherein klar ist, an welchen Port weitergesendet werden soll. Damit ist die optimale Nutzung aller vorhandenen Verbindungsstrecken innerhalb des schaltbaren Datennetzes möglich. Redundante Verbindungsstrecken des schaltbaren Datennetzes, die für die adressbasierte Durchschaltung der nicht echtzeitkritischen Kommunikation nicht benutzt werden dürfen, weil es andernfalls zu Zirkularitäten von Datenpaketen kommen würde, können aber im Voraus für die Planung der Weiterleitungsstrecken berücksichtigt und somit für die Echtzeitkommunikation benutzt werden.

Dadurch ist die Realisierung von redundanten Netzwerktopologien, z.B. Ringe für fehlertolerante Echtzeitsysteme, möglich. Datenpakete können redundant auf disjunkten Pfaden gesendet werden, Zirkularitäten von Datenpaketen treten nicht auf. Ein weiterer Vorteil der vorausgeplanten Weiterleitung ist, dass die Überwachung jeder Teilstrecke dadurch quittungslos möglich und eine Fehlerdiagnose damit einfach durchführbar ist.

Eine weitere vorteilhafte Ausgestaltung eines solchen Systems ist dadurch gekennzeichnet, dass eine Koppeleinheit zwei getrennte Zugänge zum jeweiligen Teilnehmer aufweist, wobei ein Zugang für den Austausch von echtzeitkritischen Daten und der andere Zugang für den Austausch von nicht echtzeitkritischen Daten vorgesehen ist.

Dies hat den Vorteil, dass echtzeitkritische und nicht echtzeitkritische Daten getrennt verarbeitet werden. Der Zugang für die nicht echtzeitkritischen Daten entspricht der handelsüblichen Schnittstelle eines regulären Ethernet-Kontrollers, wodurch die bisher existierende Software, insbesondere Treiber, ohne Einschränkung verwendbar ist. Dasselbe gilt für die bisher existierende Software für ein nicht echtzeitfähiges Datennetz.

Der Erfindung liegt die Aufgabe zugrunde, Anwendungen eines schaltbaren Datennetzes, welches Echtzeit- und nicht Echtzeitkommunikation in einem Übertragungszyklus erlaubt, insbesondere in einem schaltbaren Datennetz entsprechend der DE 100 58 524.8 anzugeben.

Die der Erfindung zugrunde liegende Aufgabe wird mit den Merkmalen der unabhängigen Patentansprüche jeweils gelöst. Bevorzugte Ausführungsformen der Erfindung sind in den abhängigen Ansprüchen angegeben.

Die vorliegende Erfindung ist besonders vorteilhaft für Applikationen in den Bereichen von Automatisierungsausrüstungen für Produktionsmaschinen (z. B. Textilmaschinen, Verpackungsmaschinen, Kunststoffmaschinen, Holz-/Glas-/Keramik-Maschinen, Druckmaschinen, Hebewerkzeuge, Werkzeugmaschinen, Pressen, Roboter, etc.)

Nach einer bevorzugten Ausführungsform einer erfindungsgemäßen Anwendung erfolgt die Regelung eines Teilnehmers eines schaltbaren Datennetzes von einem zweiten Teilnehmer über das Datennetz, das heißt, der Regelkreis wird über das schaltbare Datennetz geschlossen.

Für die Kommunikation von Ist- und Soll-Werten bzw. von Stellgrößen über das Datennetz wird dabei der echtzeitfähige Bereich der Übertragungszyklen genutzt.

Aufgrund dessen erfolgt die Kommunikation der für die Regelung erforderlichen Datentelegramme innerhalb determinierter Zeitfenster. Dies hat den Vorteil, dass die Regelung zum einen schnell erfolgt und auch Schwingungseffekte vermieden werden. Solche Schwingungseffekte stellen sich nämlich bei aus dem Stand der Technik bekannten Ansätzen zur Realisierung eines Regelkreises über ein Datennetz ein, wenn die Übertragungszeit zwischen den Teilnehmern des Datennetzes variieren kann.

Nach einer weiteren bevorzugten Anwendung der vorliegenden Erfindung wird ein Leitwert über das schaltbare Datennetz übertragen. Ein solcher Leitwert wird dabei von einem der Teilnehmer des Datennetzes für einen oder mehrere Teilnehmer des Datennetzes generiert. Hierbei kann es sich beispielsweise um die Erfassung eines Ist-Werts einer Achse, das heißt, einer so genannten Master-Achse, einer Anlage handeln.

Aufgrund dieses Ist-Werts wird von dem betreffenden Teilnehmer ein Leitwert generiert, der für die Steuerung von so genannten Slave-Achsen verwendet wird. Ein solcher Leitwert wird zu den betreffenden Teilnehmern des schaltbaren Datennetzes, die die Slave-Achsen steuern, übertragen.

Besonders vorteilhaft ist dabei, dass die Übertragung eines Datentelegramms mit dem Leitwert in dem echtzeitfähigen Teil eines Übertragungszyklus erfolgt, so dass die für die Übertragung des Datentelegramms erforderliche Zeit determiniert ist.

Unter einer Steuerung wird hier z.B. eine speicherprogrammierbare Steuerung, eine Motion-Control-Steuerung oder eine numerische Steuerung verstanden. Die Funktionalität einer solchen Steuerung kann auch in einem Antrieb integriert sein.

Ein weiterer besonderer Vorteil bei dieser Ausführungsform ist ferner, dass auch die Erfassung der Ist-Werte synchron zu den Kommunikationszyklen erfolgen kann. Dadurch ist sichergestellt, dass die Ist-Werte an allen Achsen im Wesentlichen zum selben Zeitpunkt, der durch die Synchronisierung der Kommunikationszyklen gegeben ist, erfolgt. Dies ist besonders bei Gleichlaufanwendungen ein wesentlicher Vorteil.

Eine weitere bevorzugte Anwendung der vorliegenden Erfindung betrifft die Kopplung einer Eingabe/Ausgabe-Station an eine Steuereinheit. Bei Steuereinheiten, insbesondere so genannten speicherprogrammierbaren Steuerungen (SPS), ist es allgemein üblich, die Eingabe/Ausgabe-Funktionalität in einer getrennten Station zu realisieren. Erfindungsgemäß wird die Eingabe/Ausgabe-Station unmittelbar über das schaltbare Datennetzwerk mit der Steuereinheit gekoppelt. Die Übertragung der entsprechenden Datentelegramme erfolgt dabei in dem echtzeitfähigen Bereich des Übertragungszyklus.

Eine weitere bevorzugte Anwendung der vorliegenden Erfindung betrifft die Übertragung von Datentelegrammen mit Applikationsdaten über ein schaltbares Datennetz der genannten Art. Hierzu kann die Projektierung des Datennetzes so erfolgen, dass die Übertragung eines entsprechenden Datentelegramms innerhalb eines definierten Zeitfensters nach einer Applikationsanforderung möglich ist.

Eine Applikation in einer Steuerungskomponente kann beispielsweise durch entsprechende Parametrierung bzw. Verschaltung von Komponentenfunktionalität ausgeprägt sein (z.B. Parametrierung eines Antriebs und damit applikative Ausprägung einer enthaltenen Technologiefunktionalität).

Eine andere mögliche Ausprägung einer Applikation kann eine durch den Anwender programmierbare Automatisierungskomponente sein. Die applikative Ausprägung wird hier durch ein entsprechendes ladbares Anwenderprogramm erreicht. Als programmierbare Automatisierungskomponenten sind hier wieder alle Facetten wie Antriebe, Motion-Controller, SPS, numerische Steuerungen vorstellbar.

Die Nutzung der Kommunikationsfunktionalität aus der Applikation kann je nach Ausprägung
- ein Mapping von Parametern auf den Kommunikationskanal (bei rein parametrierten, nicht programmierbaren Komponenten),
- ein Mapping von Variablen des Anwenderprogramms (bei programmierbaren Komponenten) auf den Kommunikationskanal,
- ein Mapping von Automatisierungskomponenten immanenter Kommunikationsverbindungen (z.B. Gleichlaufverbindungen von einer Leitachse/Leitgeber zu einer Folgeachse) sein.

Ein Anwendungsbeispiel für die Übertragung von Applikationsdaten mittels eines Datentelegramms in einem Bereich eines Übertragungszyklus für die Echtzeitkommunikation ist die Übertragung eines Not-Aus Kommandos (beispielsweise über die Verteilung einer Variable des Anwenderprogramms) an verschiedene Teilnehmer des schaltbaren Datennetzwerks.

Für die Übertragung eines solchen Datentelegramms ist es wesentlich, dass es innerhalb einer vorgegebenen maximalen Zeitdauer bei jedem der betreffenden Teilnehmer empfangen wird.

Eine weitere bevorzugte Anwendung der Erfindung betrifft die Generierung einer Relativuhr in einem der Teilnehmer. Die Relativuhr wird von einer Master-Uhr generiert und zyklisch im Netzwerk verteilt und sorgt dafür, daß alle im Datennetzwerk beteiligten Teilnehmer über eine gleich eingestellte Uhrzeit verfügen. Die Zeitbasis für die Relativuhr ist dabei durch die synchronen Übertragungszyklen und/oder die Unterteilung der Übertragungszyklen in Zeitschlitze gegeben.

Basierendauf dieser gemeinsamen Uhrzeit können Ereignisse mit Uhrzeitstempeln erfaßt werden (z.B. Flankenerkennung von digitalen I/O's) bzw. Schaltvorgänge (z.B. Schalten von digitalen/analogen Ausgängen) mit einem entsprechenden Zeitstempel versehen werden und die Schaltausgabe basierend auf dieser gemeinsamen Relativzeit ausgeführt werden.

Nach einer weiteren bevorzugten Anwendung der Erfindung wird das schaltbare Datennetz und insbesondere der Bereich des Übertragungszyklus für die nicht echtzeitkritische Kommunikation für eine Datenübertragung mittels eines Internetprotokolls, insbesondere mittels des TCP/IP-Protokolls, verwendet. Beispielsweise kann ein Benutzer über eine TCP/IP Verbindung eine Maschine einrichten, warten, diagnostizieren, Maschinenparameter einstellen, Software-Upgrades durchführen und dergleichen mehr.

Ferner ist auf dieser Basis auch die Realisierung von so genannten Remote Procedure Calls (RPC) möglich. Hierbei werden beispielsweise von einem Datenserver eines der Teilnehmer des schaltbaren Datennetzwerks bestimmte Daten von einem anderen Teilnehmer und/oder einem Benutzer abgefragt, z. B. hinsichtlich der Einstellung von Maschinenparametern, Bedienungsanleitungen oder die Abfrage von Rezepturen für eine Kunststoffspritzgießmaschine.

Im Weiteren werden bevorzugte Ausführungsformen der Erfindung mit Bezugnahme auf die Zeichnungen näher erläutert. Es zeigen:
- Figur 1: ein Blockdiagramm einer Ausführungsform eines erfindungsgemäßen Systems für die Schließung eines Regelungskreises über ein schaltbares Datennetz,
- Figur 2: eine weitere Ausführungsform eines erfindungsgemäßen Systems für die Übertragung von Leitwerten in einer Gleichlaufsteuerung,
- Figur 3: eine weitere Ausführungsform eines erfindungsgemäßen Systems hinsichtlich der Kopplung einer Eingabe/Ausgabe Station mit einer Steuerungseinheit über ein schaltbares Datennetz,
- Figur 4: eine weitere Ausführungsform eines erfindungsgemäßen Systems für die Realisierung einer Relativuhr in einem der Teilnehmer eines schaltbaren Datennetzes und der genauen Erfassung von Eingängen bzw. einem genauen Schalten von Ausgängen basierend auf dieser Relativuhr.

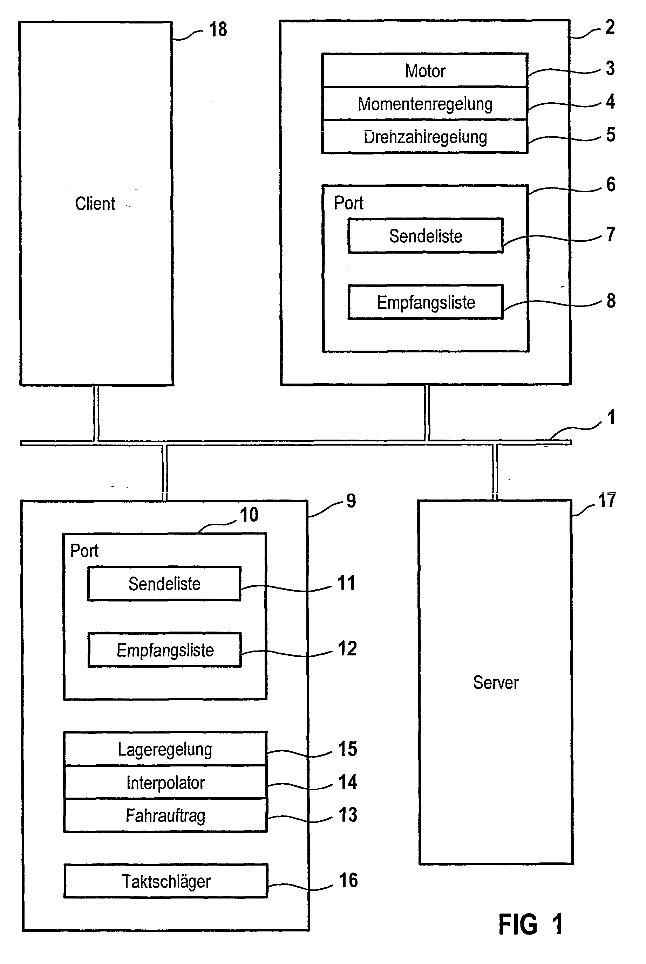

Die Figur 1 zeigt eine Ausführungsform eines erfindungsgemäßen Automatisierungssystems mit einem schaltbaren Datennetz 1. Die Kommunikation zwischen Teilnehmern des schaltbaren Datennetzes erfolgt über eine oder mehrere Punkt-zu-Punkt Verbindungen in zueinander synchronen Übertragungszyklen. Jeder der Übertragungszyklen hat einen ersten Bereich zur Übertragung von echtzeitkritischen Daten und einen zweiten Bereich zur Übertragung von nicht echtzeitkritischen Daten.

Die Übertragung der echtzeitkritischen Daten erfolgt dabei deterministisch, dass heißt im Rahmen einer im Einzelnen geplanten Kommunikation. Die Übertragung der nicht echtzeitkritischen Daten erfolgt nicht deterministisch und ohne die Möglichkeit einer vorherigen genauen Planung.

Die Übertragung von Daten in einem nicht echtzeitkritischen Bereich erfolgt typischerweise, wenn eine besondere Anforderung z. B. eines Benutzers zu erfüllen ist. Für die Übertragung der nicht echtzeitkritischen Daten in dem betreffenden Bereich des Übertragungszyklus wird dabei vorzugsweise ein Internetprotokoll, insbesondere TCP/IP, verwendet.

Dies hat insbesondere den Vorteil, dass auf die verfügbare Internettechnologie und die entsprechenden Gerätekomponenten und Softwareprogramme, insbesondere Browserprogramme, zurückgegriffen werden kann.

Das Datennetz 1 ist ferner skalierbar, dass heißt, die Länge der verschiedenen Übertragungszyklen zwischen Teilnehmern des Datennetzes 1 können eine z.B. durch Projektierung festgelegte, unterschiedliche Länge haben. Die zeitlichen Längen der Übertragungszyklen müssen dabei jedoch ein ganzzahliges Vielfaches voneinander betragen und zueinander synchron sein.

Ebenfalls können unterschiedlich Übertragungsraten für verschiedene Punkt-zu-Punkt Verbindungen gewählt werden. Dies erlaubt es, unterschiedliche "Quality of Services" (mit beispielsweise unterschiedlichen Baudraten) zu realisieren.

In dem System der Figur 1 ist ein Antrieb 2 für die Steuerung eines Motors 3 an dem Datennetz 1 angeschlossen. Der Antrieb 2 beinhaltet eine Momentenregelung 4 und eine Drehzahlregelung 5 für den Motor 3. Die Momentenregelung 4 und die Drehzahlregelung 5 sind dabei kaskadiert. Interpolation, Lageregelung, Drehzahlregelung und Momentenregelung sind kaskadiert, laufen getaktet und sind zueinander synchronisiert.

Für die Kommunikation über das Datennetz 1 hat der Antrieb 2 ferner einen Port 6. Der Port 6 hat eine Sendeliste 7 und eine Empfangsliste 8 für die Echtzeitkommunikation. Beispielsweise spezifiziert die Sendeliste 7 in welchem Übertragungszyklus welches Datentelegramm an welche Adresse vom Port 6 zu versenden ist.

Entsprechend spezifiziert die Empfangsliste 8 den Empfang von Datentelegrammen von anderen Teilnehmern des Systems. Die Sendeliste 7 und die Empfangsliste 8 beziehen sich also auf den deterministischen und echtzeitkritischen Teil der Kommunikation, der in einem Bereich jedes Übertragungszyklus stattfindet, nicht aber auf den anderen Bereich des Übertragungszyklus für die nicht echtzeitkritische Kommunikation über TCP/IP.

Ferner ist an dem Datennetz 1 ein Steuergerät 9 angeschlossen. Das Steuergerät 9 hat einen Port 10 mit einer Sendeliste 11 und einer Empfangsliste 12 entsprechend dem Port 6 mit der Sendeliste 7 und der Empfangsliste 8. Das Steuergerät 9 hat ein Modul 13 zur Eingabe und/oder Erzeugung eines Fahrauftrags für ein bestimmtes Aggregat, welches vom Motor 3 angetrieben wird. Bei diesem Aggregat kann es sich beispielsweise um einen Roboterarm handeln.

Ferner hat das Steuergerät 9 einen Interpolator 14. Der Interpolator ermittelt aus einem Fahrauftrag den erforderlichen Bewegungsablauf, um von der Ist-Position zu der Soll-Position zu gelangen.

Das Steuergerät 9 hat ferner eine Lageregelung 15 für die konkrete Positionierung an einer bestimmten Stelle. Die Lageregelung 12 und/oder der Interpolator 14 können optional auch im Antrieb 2 realisiert sein. Entsprechend kann auch die Drehzahlregelung 5 im Steuergerät 9 realisiert sein.

Das Steuergerät 9 hat ferner einen Taktschläger 16. Der Taktschläger 16 bildet die Zeitbasis für das System der Figur 1. Der Taktschläger generiert Datentelegramme für jeden der Teilnehmer des Datennetzes 1 mit Daten, die die Zeitbasis des Taktschlägers 16 zum Empfangszeitpunkt bei dem betreffenden Teilnehmer angeben. Hierdurch werden die einzelnen lokalen Zeitbasen in den Teilnehmern mit der Zeitbasis des Taktschlägers 16 synchronisiert.

Ferner sind an dem Datennetz 1 eine Automatisierungskomponente 17 und eine Automatisierungskomponente 18 angeschlossen. Die Automatisierungskomponente 17 beinhaltet einen Datenserver. In dem Datenserver können unterschiedlichste Dateien gespeichert sein, wie z. B. Benutzerinformationen, technische Dokumentation, Bedienungsanleitungen, Arbeitsanleitungen, Wartungspläne, Maschinenparameter, Produktionspläne, Rezepturen für die Herstellung von Kunststoffspritzgießformteilen etc.

Die Automatisierungskomponente 18 hat dagegen die Funktion eines Clients, der je nach Bedarf auf die Automatisierungskomponente 17 den Zugriff auf bestimmte dort abgespeicherte Daten hat. Bei der Automatisierungskomponente 18 kann es sich beispielsweise um eine Bedienkonsole mit einem Internetbrowser oder auch um jede andere beliebige Automatisierungskomponente, beispielsweise Programmier-, Projektierungs-, Peripheriegeräte, wie z. B. Ein-/Ausgabe-Baugruppen, Aktoren, Sensoren, Antriebe, Steuerungen, speicherprogrammierbare Steuerungen (SPS) oder andere Kontrolleinheiten, Computer oder Maschinen, die elektronische Daten mit anderen Maschinen austauschen, handeln. Unter Kontrolleinheiten werden dabei Regler- oder Steuerungseinheiten jeglicher Art verstanden.

Beim Betrieb des Systems der Figur 1 wird vom Antrieb 2 ein bestimmter Ist-Wert hinsichtlich der Regelung des Motors 3 erfasst. Die Erfassung dieses Ist-Werts kann dabei vorzugsweise taktsynchron mit den Übertragungszyklen auf dem Datennetz 1 erfolgen, das heißt, die Erfassung findet zu einem genau determinierten Zeitpunkt statt.

Der so erfasste Ist-Wert wird dann gemäß der Sendeliste 7 des Ports 6 mittels eines Datentelegramms in dem echtzeitfähigen Bereich des betreffenden Übertragungszyklus über das Datennetz 1 zum Steuergerät 9 übertragen. Dort wird das Datentelegramm am Port 10 gemäß der Empfangsliste 12 empfangen. Die Lageregelung 15 erzeugt einen Soll-Wert für die Motorsteuerung des Motors 3. Die Generierung eines solchen Soll-Werts kann ebenfalls taktsynchron mit den Übertragungszyklen auf dem Datennetz 1 erfolgen, so dass auch die Generierung des Soll-Werts zu einem jeweils vorher bestimmten Zeitpunkt erfolgt.

Aus dem vom Steuergerät 9 über das Datennetz 1 empfangenen Ist-Wert und dem Soll-Wert der Lageregelung 15 wird eine Regelabweichung ermittelt. Diese Regelabweichung wird zur Bildung einer Stellgröße in der Lageregelung 15 verwendet. Diese Stellgröße wird dann gemäß der Sendeliste 11 vom Steuergerät 9 zum Antrieb 2 in einem Datentelegramm während der Übertragung eines echtzeitfähigen Bereichs des betreffenden Übertragungszyklus übertragen. Der Empfang im Antrieb 2 erfolgt wiederum entsprechend der Empfangsliste 8. Aufgrund der empfangenen Stellgröße wird dann der Motor 3 entsprechend nachgeregelt.

Dieser Vorgang der Erfassung eines Ist-Werts, der Übertragung des Ist-Werts über das Datennetz 1, die Erzeugung einer Stellgröße im Steuergerät 9, die Übertragung der Stellgröße über das Datennetz 1 und die Nachregelung gemäß der Stellgröße im Antrieb 2 erfolgt dabei fortlaufend auf der Basis der deterministischen Kommunikation über das Datennetz 1. Aufgrund dieser deterministischen Kommunikation kann eine schnelle Regelung implementiert werden. Gleichzeitig werden unvorhersagbare Schwingungseffekte dadurch im Ansatz verhindert, so dass die Kommunikation deterministisch abläuft.

Gleichzeitig zu dieser Regelung über das Datennetz 1 kann beispielsweise die Automatisierungskomponente 18 auf den Server 17 zugreifen, um eine Datenbankabfrage durchzuführen. Die aus dieser Datenbankabfrage resultierenden Daten können ebenfalls während der fortlaufenden echtzeitkritischen Kommunikation für die Regelung über das Datennetz übertragen werden, in dem für diese nicht echtzeitkritische Kommunikation der zweite Bereich in dem Übertragungszyklus genutzt wird. Die Clientfunktionalität in 18 bzw. die Serverfunktionalität in 17 können auch in einer beliebigen Automatisierungskomponente (z.B. in der Steuerung bzw. im Antrieb) realisiert sein.

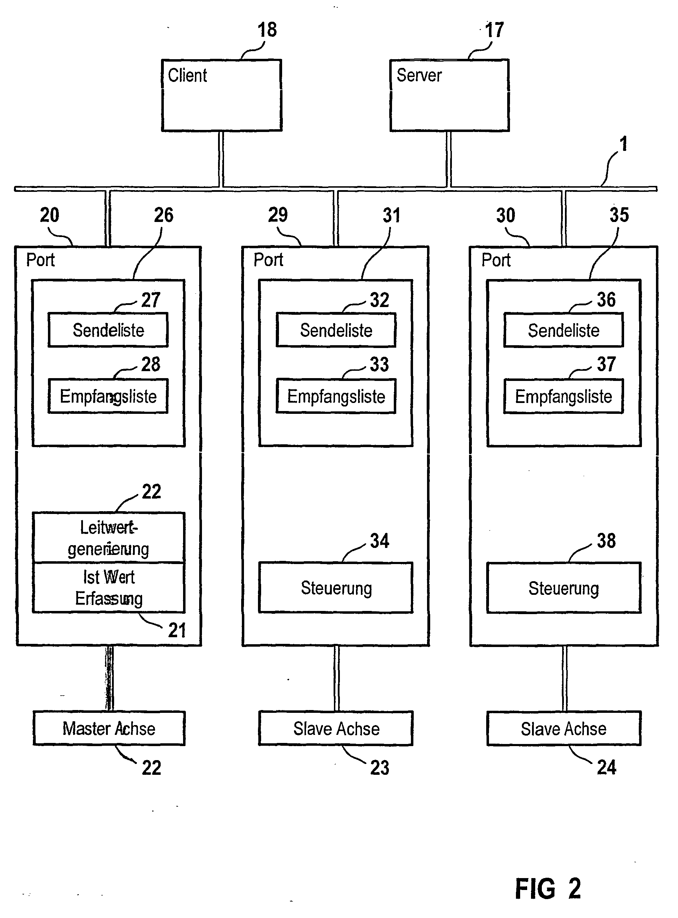

Die Figur 2 zeigt ein Blockdiagramm eines erfindungsgemäßen - Systems mit einer Anwendung hinsichtlich der Übertragung eines Leitwerts. Elemente der Figur 2, die Elementen der Figur 1 entsprechen, sind dabei mit denselben Bezugszeichen gekennzeichnet.

In dem System der Figur 2 ist eine Steuerung 20 an das Datennetz 1 angeschlossen. Alternativ zu der Steuerung 20 kann auch ein Geber vorgesehen sein. Die Steuerung 20 hat eine Komponente 21 für die Ist-Wert Erfassung der Lage und/oder Drehzahl einer Master-Achse 22.

Die Master-Achse 22 gehört zu einer Anlage mit mehreren weiteren Achsen, insbesondere den Slave-Achsen 23 und 24. Die so genannte Master-Achse 22 bildet dabei die Referenz für die Slave-Achsen 23 und 24, dass heißt, die Slave-Achsen 23 und 24, folgen jeweils der Bewegung der Master-Achse mit einem linearen (z.B. Getriebe) oder nichtlinearen (z.B. Kurvenscheibe) Bezug zur Master-Achse.

Die Slave-Achse folgt der Master-Achse nach dem entsprechenden Bezug mit möglichst geringem Versatz. Eine solche Anwendung bezeichnet man auch als Gleichlaufsteuerung. Der Leitwert kann eine reale Achse (wie im vorliegenden Ausführungsbeispiel), eine virtuelle Achse (nur gerechnet), sich aus einem Gebersignal ableiten oder als Zeitfunktion vorgegeben werden.

Aus der Ist-Wert Erfassung hinsichtlich der Master-Achse 22 in der Komponente 21 wird in der Komponente 22 der Steuerung 20 ein Leitwert für die Slave Achsen 23 und 24 generiert. Dieser Leitwert wird als Teil eines Datentelegramms vom Port 26 gemäß der Sendeliste 27 in einem determinierten Übertragungszyklus über das Datennetz 1 gesendet. Dieses Datentelegramm ist vorzugsweise an die beiden Steuerung 29 und 30 der Slave-Achsen 23 bzw. 24 gerichtet.

Die Steuerung 29 hat einen Port 31 mit einer Sendeliste 32 und einer Empfangsliste 33. Am Port 31 empfängt also die Steuerung 29 das Datentelegramm mit dem Leitwert von der Steuerung 20 entsprechend der Empfangsliste 33 zu einem determinierten Übertragungszyklus. Dieser Leitwert wird vom Steuerungsmodul 34 der Steuerung 29 für eine entsprechende Steuerung der Slave-Achse 23 ausgewertet. Die Bewegung der Slave-Achse 23 wird mit einem bestimmten Positionsbezug zur Master-Achse ausgeführt (z.B. linearer oder nicht-linearer Positionsbezug von Master- zu Slave-Achse)

Entsprechend verfährt auch die Steuerung 30, die an dessen Port 35 mit der Sendeliste 36 und der Empfangsliste 37 das Datentelegramm mit dem Leitwert ebenfalls empfängt. Dieses wird im Steuerungsmodul 38 entsprechend für die Steuerung der Slave-Achse 24 ausgewertet.

Die Datentelegramme mit dem Leitwert werden von der Steuerung 20 innerhalb vorgegebener zeitlicher Abstände in den echtzeitfähigen Bereichen der betreffenden Übertragungszyklen übertragen. Gleichzeitig und unabhängig von dieser Leitwertführung kann wiederum eine Client-Server Kommunikation zwischen den Automatisierungskomponenten 17 und 18 über das Datennetz 1 erfolgen, wie bereits mit Bezug auf die Figur 1 erläutert wurde. Auch in diesem Anwendungsfall kann die Client- oder Serverfunktionalität in den Steuerungen oder anderen Automatisierungskomponenten integriert sein.

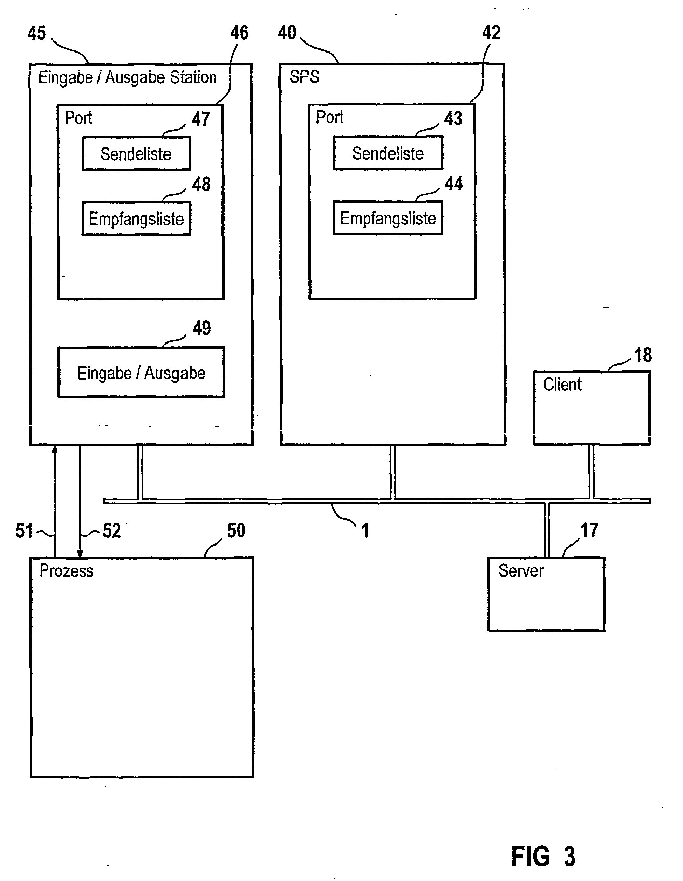

Die Figur 3 zeigt ein weiteres Anwendungsbeispiel betreffend die schnelle Anbindung einer Eingabe/Ausgabe-Station an eine Steuerung, z.B. eine speicherprogrammierbare Steuerung (SPS), eine Motion-Control-Steuerung oder eine numerische Steuerung. Die Funktionalität einer solchen Steuerung kann auch in einem Antrieb integriert sein. Elemente der Figur 3, die Elementen der Figur 1 oder der Figur 2 entsprechen, sind wiederum mit denselben Bezugszeichen gekennzeichnet.

Das System der Figur 3 hat eine Steuerung 40 mit einem Port 42. Der Port 42 hat wiederum eine Sendeliste 43 und eine Empfangsliste 44 für die deterministische Kommunikation über das Datennetz 1.

Ferner ist eine Eingabe/Ausgabe-Station 45 an das Datennetz 1 angeschlossen. Die Eingabe/Ausgabe-Station 45 beinhaltet einen Port 46 wiederum mit einer Sendeliste 47 und einer Empfangsliste 48. Ferner beinhaltet die Eingabe/Ausgabe-Station ein Eingabe/Ausgabe-Modul 49.

Aufgrund der Sende- und Empfangslisten in jedem der Teilnehmer des Datennetzes 1 erfolgt die Kommunikation über das Datennetz 1 wiederum deterministisch und zwar während der für die Übertragung von Echtzeitdaten vorgesehenen Bereiche der betreffenden Übertragungszyklen. Dieser Umstand wird für die Kopplung der Eingabe/Ausgabe-Station 45 mit der speicherprogrammierbaren Steuerung 40 genutzt.

In dem Eingabe/Ausgabe-Modul 49 der Eingabe/Ausgabe-Station 45 werden über den Port 46 empfangene Datentelegramme von Automatisierungskomponenten erfasst.

Mittels des Moduls 49 werden ferner Prozesswerte aus dem Prozess 50 erfasst. Hierzu erhält das Modul 49 über die Leitung 51 Ist-Werte von Sensoren, die den Prozess 50 erfassen.

Vom Modul 49 aus werden die entsprechenden Daten mittels weiterer Datentelegramme von der Eingabe/Ausgabe-Station 45 zu der speicherprogrammierbaren Steuerung 40 übertragen und dort verarbeitet. Die aus dieser Verarbeitung resultierenden Daten werden dann wiederum von der Steuerung 40 an die Eingabe/Ausgabe-Station 45 bzw. deren Eingabe/Ausgabe-Modul 49 übertragen, um dort an die betreffenden Automatisierungskomponenten weitergeleitet zu werden.

Dies erfolgt beispielsweise über die Leitung 52 zu Automatisierungskomponenten des Prozesses 50. Parallel und unabhängig davon kann wiederum eine Client-Server Verbindung hinsichtlich nicht echtzeitkritischer Daten über das Datennetz 1 ablaufen.

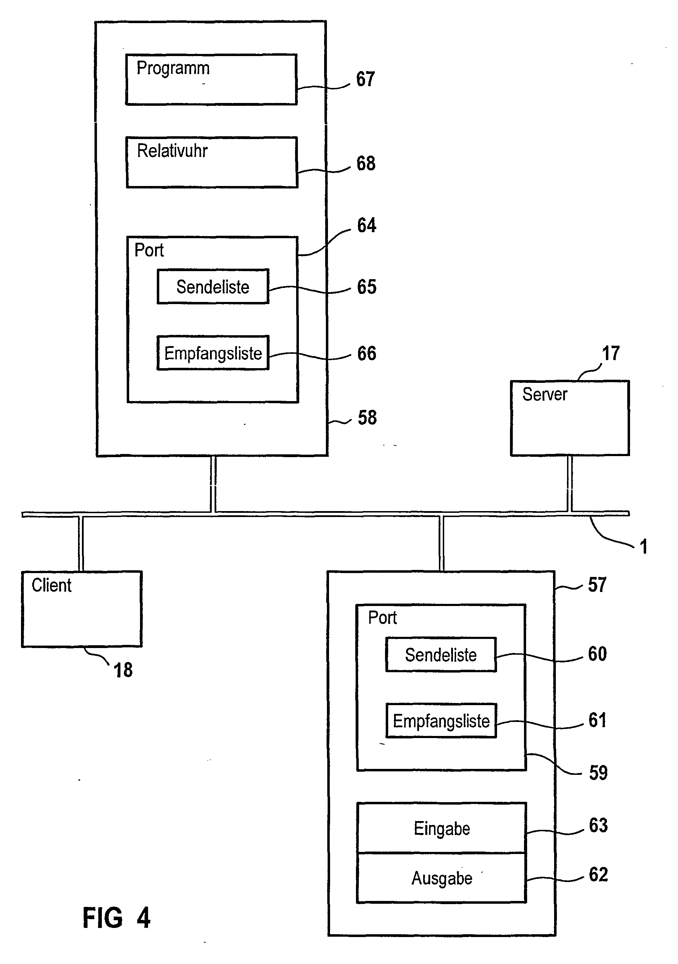

Die Figur 4 zeigt ein Blockdiagramm hinsichtlich einer weiteren Anwendung für die Erzeugung einer Master Relativuhr in einem der Teilnehmer des Datennetzes 1. Elemente des Systems der Figur 4, die Elementen der Figuren 1, 2 und/oder 3 entsprechen, sind dabei wiederum mit denselben Bezugszeichen gekennzeichnet.

Das System der Figur 4 beinhaltet verschiedene Automatisierungskomponenten und zwar insbesondere die Eingabe/Ausgabe-Einheit 57 und die Steuerung 58. Die Ein/Ausgabe-Einheit 57 hat einen Port 59 wiederum mit einer Sendeliste 60 und einer Empfangsliste 61. Ferner beinhaltet die Ein/Ausgabe-Einheit 57 eine Komponente für die Ausgabe 62 und eine Komponente für die Eingabe 63.

Die Automatisierungskomponente (z.B. eine programmierbare Steuerung) 58 hat einen Port 64 mit einer Sendeliste 65 und einer Empfangsliste 66. Ferner hat die Steuerung 58 ein Programm 67 und eine Relativuhr 68 zur Erzeugung einer relativen Zeitbasis.

Die Steuerung 58 stellt die Zeitinformation der Relativuhr 68 im Datennetz 1 durch Versendung von Datentelegrammen zyklisch zur Verfügung. Ereignisse (z.B. Schaltereignisse von Eingängen) in einer Ein/Ausgabe-Einheit 57 können mit einem aus der Relativuhrinformation abgeleiteten Zeitstempel versehen werden und über das Datennetz an die Steuerung 58 geschickt werden. Diese zeitliche Ereignisinformation kann in der Steuerung 58 durch die Steuerung oder durch ein entsprechendes Anwenderprogramm weiter verwertet werden.

Schaltereignisse mit einem Zeitstempel (basierend auf der Relativuhr) können in der Automatisierungkomponente 58 generiert werden (über Steuerung oder Anwenderprogramm) und über das Datennetz an die Ein/Ausgabe-Einheit 57 übertragen werden. In der Ein/Ausgabe-Einheit 57 können dann diese Schaltereignisse zeitrichtig (basierend auf den Zeitstempeln) ausgeführt werden.

Auch hier gilt wieder, dass parallel und unabhängig von den echtzeitkritischen Datentelegrammen zur Auslösung der Relativuhr 68 eine Client-Server Kommunikation über das Datennetz 1 stattfinden kann.

Die vorliegende Erfindung ermöglicht also auf der Basis des Datennetzes 1 eine Vielzahl von Anwendungen aus den Bereichen von Automatisierungsausrüstungen für Produktionsmaschinen (z.B. Textilmaschinen, Verpackungsmaschinen, Kunststoffmaschinen, Holz-/Glas-/Keramik-Maschinen, Druckmaschinen, Hebezeuge, Werkzeugmaschinen, Pressen, Roboter) wie z.B.:
- Taktsynchronisation von Kommunikationsteilnehmern mit einer Genauigkeit von <= 1us
- Schließen von Regelkreisen über den Bus
- Synchronisierte Istwerterfassung und Sollwertausgabe bezogen auf alle Kommunikationsteilnehmer (Steuerungen, Antriebe, I/O-Stationen)
- Übertragung von Leitwerten für Gleichlaufanwendungen
- Deterministische Übertragung von Applikationsdaten für z.B. Notaus
- Harte Echtzeitkommunikation für genannte Anwendungen in Verbindung mit azyklischer Kommunikation bzw. Standard-Internetkommunikation.
- Harte Echtzeitkommunikation in Verbindung mit RPC-Mechanismen über das gleiche Kommunikationssystem (Ethernet)
auf Basis von Ethernet.

Gemäß der Erfindung wird sowohl
- die Taktsynchronisation
- die Echtzeitkommunikation mit den typischen Anwendungen
   - Leitwertkopplung
   - Schließen von Regelkreisen über Bus
   - Synchrones Erfassen von Istwerten, Eingängen, Sensoren
   - Synchrones Steuern und Schalten von Ausgängen, Aktoren
   - Fast I/O
- die azyklische Kommunikation
   - über proprietäre Protokolle
   - über Standardprotokolle (z.B. Internet-Protokolle) mit Webserver in einer RT (Realtime) Ethernet Netzkomponente
- RPC
   - mit Client/Serverfunktionalität in einer Netzkomponente
über eine Kommunikationsverbindung auf Basis von Realtime Ethernet realisiert, als auch die Anwendung der Kommunikationsverbindung zwischen Automatisierungskomponenten von Textilmaschinen, Verpackungsmaschinen, Kunststoffmaschinen, Holz-/Glas-/Keramik-Maschinen, Druckmaschinen, Hebezeuge, Werkzeugmaschinen, Pressen, Robotern.

Innerhalb der Echtzeitkommunikation gibt es potentiell mehrere Kommunikationszyklen um unterschiedliche "quality of services" zu realisieren, wie zum Beispiel:
1ms-Zyklus:
   - Gleichlaufverbindung (Leitwert über Bus)
   - Drehzahlsoll-/Lagesoll-/IPO-Schnittstelle für zeitkritische Achsen
   - Fast I/O Ankopplung
4ms-Zyklus:
   - zeitunkritische Achsen (Frequenzumrichter, einfache Positionierachsen)
   - Applikationsdaten z.B. :
      - NotAus-Steuerung
      - Verteiltes Schieberegister (Produktverfolgung)
      - Ansteuerung (z.B. Betriebsarten) in verteilten Systemen
   - Vorgabe von neuen Bohraufträgen (z.B. Bohrtiefe) bei Bohrautomaten
Asynchroner und/oder event-gesteuerter Zyklus:
   - Projektierungs-Daten und -Ereignisse
   - Daten und Routinen für Fehlerhandling und Diagnose

Mit diesen verschiedenen Kommunikationszyklen ist eine feinere Systemskalierung möglich.

Zusammengefasst betrifft die Erfindung ein System und Verfahren
- zur Regelung eines ersten Teilnehmers in einem schaltbaren Datennetz von einem zweiten Teilnehmer in dem schaltbaren Datennetz, wobei die Kommunikation zwischen Teilnehmern des schaltbaren Datennetzes über eine oder mehrere Punkt-zu-Punkt Verbindungen in zueinander synchronen Übertragungszyklen erfolgt;
- zur Übertragung eines Leitwerts von einem ersten Teilnehmer eines schaltbaren Datennetzes zu einem zweiten Teilnehmer des schaltbaren Datennetzes, wobei die Kommunikation zwischen Teilnehmern des schaltbaren Datennetzes über eine oder mehrere Punkt-zu-Punkt Verbindungen in zueinander synchronen Übertragungszyklen erfolgt;
- zur Übertragung von Eingabe- und Ausgabewerten zwischen einer Eingabe-/Ausgabe-Station und einer Steuereinheit über ein schaltbares Datennetz;
- zur Übertragung eines Datentelegramms mit Applikationsdaten über ein schaltbares Datennetz;
- zur Generierung einer Relativuhr in einem Teilnehmer eines schaltbaren Datennetzes.

## Patentansprüche

1. Verfahren zur taktsynchronen Regelung eines ersten Teilnehmers (2) in einem schaltbaren Datennetz (1) von einem zweiten Teilnehmer (9) des schaltbaren Datennetzes (1), wobei die Kommunikation zwischen Teilnehmern des schaltbaren Datennetzes (1) über eine oder mehrere Punkt-zu-Punkt Verbindungen in zueinander synchronen Übertragungszyklen erfolgt, und jeder der Übertragungszyklen in einen ersten Bereich zur Übertragung von echtzeitkritischen Daten und einen zweiten Bereich zur Übertragung von nicht echtzeitkritischen Daten unterteilt ist, mit folgenden Schritten:
- Erfassung eines oder mehrerer Ist-Werte synchron zu den Kommunikationszyklen von dem ersten Teilnehmer (2),
- Übertragung eines ersten Datentelegramms mit dem/den Ist- Werten von dem ersten Teilnehmer (2) über das schaltbare Datennetz (1) im ersten Bereich eines Übertragungszyklus zu dem zweiten Teilnehmer (9),
- Ermittlung einer Regelabweichung aus dem/den Ist-Werten und einem Soll-Wert des zweiten Teilnehmers (9) und Ermittlung einer Stellgröße aus der Regelabweichung durch den zweiten Teilnehmer (9),
- Übertragung eines zweiten Datentelegramms von dem zweiten Teilnehmer (9) an den ersten Teilnehmer (2) im ersten Bereich eines nachfolgenden Übertragungszyklus mit der Stellgröße.

2. Verfahren nach Anspruch 1, wobei nach der Erfassung des Ist-Werts von dem ersten Teilnehmer (20), ein Leitwert für den zweiten Teilnehmer (29, 30) basierend auf dem Ist-Wert ermittelt wird, eine Übertragung eines Datentelegramms mit dem Leitwert im ersten Bereich des Übertragungszyklus von dem ersten Teilnehmer (20) an den zweiten Teilnehmer (29, 30), sowie eine Übernahme des Leitwerts im zweiten Teilnehmer (29, 30) und eine Ausführung einer auf den Leitwert bezogenen Bewegung erfolgt, wobei der Bewegungsbezug linear oder nichtlinear sein kann.

3. Verfahren nach Anspruch 2, wobei der erste Teilnehmer für die Leitwertgenerierung
- eine Steuerung (20) mit einer Master-Achse (22) (real oder virtuell und/oder
- eine Steuerung mit einer Zeitfunktion
und/oder
- einen Leitwertgeber und/oder
- einen Antrieb
beinhaltet und der zweite Teilnehmer eine Steuerung (29, 30) oder einen Antrieb für eine oder mehrere Slave-Achsen (23, 24) basierend auf dem Leitwert beinhaltet.

4. Verfahren nach einem der vorhergehenden Ansprüche 1 bis 3, wobei jeder Teilnehmer eine Sendeliste (7, 11) und eine Empfangsliste (8, 12) für eine deterministische Kommunikation aufweist.

5. Verfahren nach einem der vorhergehenden Ansprüche 1 bis 4, wobei der zweite Bereich eines Übertragungszyklus für die Übertragung von nicht echtzeitkritischen Daten nach einem Internetprotokoll, vorzugsweise nach einem TCP/IP-Protokoll, erfolgt.

6. Verfahren nach einem der vorhergehenden Ansprüche 1 bis 5, wobei es sich bei den nicht echtzeitkritischen Daten um Daten einer Inbetriebnahme und/oder Wartung einer Anlage handelt.

7. Verfahren nach einem der vorhergehenden Ansprüche 1 bis 6, wobei es sich bei den nicht echtzeitkritischen Daten um Daten eines Remote Procedure Calls handelt, insbesondere für die Abfrage von Produktionsdaten von einem Datenserver eines Teilnehmers des schaltbaren Datennetzes (1), wobei es sich bei den Produktionsdaten beispielsweise um eine Rezeptur oder um Maschinenparameter handelt.

8. Automatisierungssystem mit Teilnehmern eines schaltbaren Datennetzes (1), wobei die Kommunikation zwischen Teilnehmern des schaltbaren Datennetzes (1) über eine oder mehrere Punkt-zu-Punkt Verbindungen in zueinander synchronen Übertragungszyklen erfolgt, und jeder der Übertragungszyklen in einen ersten Bereich zur Übertragung von echtzeitkritischen Daten und einem zweiten Bereich zur Übertragung von nicht echtzeitkritischen Daten unterteilt ist, und mit Mitteln zur
- Erfassung eines oder mehrerer Ist-Werte synchron zu den Kommunikationszyklen von dem ersten Teilnehmer (2),
- Übertragung eines ersten Datentelegramms mit dem/den Ist- Werten von dem ersten Teilnehmer (2) über das schaltbare Datennetz (1) im ersten Bereich eines Übertragungszyklus zu dem zweiten Teilnehmer (9),
- Ermittlung einer Regelabweichung aus dem/den Ist-Werten und einem Soll-Wert des zweiten Teilnehmers (9) und Ermittlung einer Stellgröße aus der Regelabweichung durch den zweiten Teilnehmer (9) und
- Übertragung eines zweiten Datentelegramms von dem zweiten Teilnehmer (9) an den ersten Teilnehmer (2) im ersten Bereich eines nachfolgenden Übertragungszyklus mit der Stellgröße.

9. Computerprogrammprodukt mit Mitteln zur Durchführung eines Verfahrens nach einem der vorhergehenden Ansprüche 1 bis 7, wenn das Computerprogramm auf einem Automatisierungssystem ausgeführt wird.

## Claims

1. Method for the clock-synchronized control of a first station (2) in a switched data network (1) by a second station (9) of the switched data network (1), the communication between stations of the switched data network (1) taking place via one or more point-to-point connections in transmission cycles which are synchronous with one another, and each of the transmission cycles being divided into a first part for the transmission of real-time-critical data and a second part for the transmission of non-real-time-critical data, having the following steps:
- acquisition of one or more actual values by the first station (2) in synchronism with the communication cycles,
- transmission of a first data telegram with the actual value or values from the first station (2) to the second station (9) via the switched data network (1) in the first part of a transmission cycle,
- determination of a control error from the actual value or values and a set point value of the second station (9), and determination of a manipulated variable from the control error by the second station (9),
- transmission of a second data telegram from the second station (9) to the first station (2) in the first part of a subsequent transmission cycle with the manipulated variable.

2. Method according to Claim 1, a reference value being determined for the second station (29, 30) based on the actual value, after the actual value is acquired by the first station (20), a data telegram with the reference value in the first part of the transmission cycle being transmitted from the first station (20) to the second station (29, 30), and the reference value being transferred in the second station (29, 30) and a movement related to the reference value being executed, it being possible for the course of the movement to be linear or non-linear.

3. Method according to Claim 2, the first station containing
- a controller (20) with a master axle (22) (real or virtual, and/or
- a controller with a timing function and/or
- a reference value sensor and/or
- a drive,
for the generation of reference values, and the second station contains a controller (29, 30) or a drive for one or more slave axles (23, 24) based on the reference value.

4. Method according to one of the preceding Claims 1 to 3, in which each station has a transmission list (7, 11) and a reception list (8, 12) for a deterministic communication.

5. Method according to one of the preceding Claims 1 to 4, in which the second part of a transmission cycle for the transmission of non-real-time-critical data takes place according to an Internet protocol, preferably according to a TCP/IP protocol.

6. Method according to one of the preceding Claims 1 to 5, in which the non-real-time-critical data is data relating to activation and/or maintenance of a piece of equipment.

7. Method according to one of the preceding Claims 1 to 6, the non-real-time-critical data being data of a remote procedure call, in particular for the interrogation of production data from a data server of a station of the switched data network (1), the production data being, for example, a recipe or machine parameters.

8. Automation system having stations of a switched data network (1), the communication between stations of the switched data network (1) taking place via one or more point-to-point connections in transmission cycles which are synchronous with one another, and each of the transmission cycles being divided into a first part for the transmission of real-time-critical data and a second part for the transmission of non-real-time-critical data, and having means for
- acquisition of one or more actual values by the first station (2) in synchronism with the communication cycles,
- transmission of a first data telegram with the actual value or values from the first station (2) to the second station (9) via the switched data network (1) in the first part of a transmission cycle,
- determination of a control error from the actual value or values and a set point value of the second station (9), and determination of a manipulated variable from the control error by the second station (9), and
- transmission of a second data telegram from the second station (9) to the first station (2) in the first part of a subsequent transmission cycle with the manipulated variable.

9. Computer program product having means for carrying out a method according to one of the preceding Claims 1 to 7 when the computer program is executed on an automation system.

## Revendications

1. Procédé pour la régulation synchrone d'un premier utilisateur (2) dans un réseau de données commuté (1) par un deuxième utilisateur (9) du réseau de données commuté (1), la communication entre des utilisateurs du réseau de données commuté (1) s'effectuant par l'intermédiaire d'une ou plusieurs liaisons point à point dans des cycles de transmission synchrones entre eux et chacun des cycles de transmission étant divisé en une première plage pour la transmission de données critiques à temps réel et une deuxième plage pour la transmission de données non critiques à temps réel, avec les étapes suivantes :
- acquisition d'une ou plusieurs valeurs réelles en synchronisation avec les cycles de communication par le premier utilisateur (2),
- transmission d'un premier télégramme de données avec la ou les valeurs réelles par le premier utilisateur (2) au deuxième utilisateur (9) par l'intermédiaire du réseau de données commuté (1) dans la première plage d'un cycle de transmission,
- détermination d'un écart de régulation à partir de la ou des valeurs réelles et d'une valeur de consigne du deuxième utilisateur (9) et détermination d'une grandeur réglante à partir de l'écart de régulation par le deuxième utilisateur (9),
- transmission d'un deuxième télégramme de données par le deuxième utilisateur (9) au premier utilisateur (2) dans la première plage d'un cycle de transmission suivant avec la grandeur réglante.

2. Procédé selon la revendication 1, dans lequel on détermine après l'acquisition de la valeur réelle par le premier utilisateur (20) une valeur de référence pour le deuxième utilisateur (29, 30) sur la base de la valeur réelle, on effectue une transmission d'un télégramme de données avec la valeur de référence dans la première plage du cycle de transmission du premier utilisateur (20) au deuxième utilisateur (29, 30) et on effectue une prise en charge de la valeur de référence dans le deuxième utilisateur (29, 30) ainsi qu'une exécution d'un mouvement par rapport à la valeur de référence, le rapport au mouvement pouvant être linéaire ou non linéaire.

3. Procédé selon la revendication 2, dans lequel le premier utilisateur contient pour la production de valeur de référence
- une commande (20) avec un axe maître (22) (réel ou virtuel) et/ou
- une commande avec une fonction temporelle et/ou
- un générateur de valeur de référence et/ou
- un dispositif moteur
et le deuxième utilisateur contient une commande (29, 30) ou un dispositif moteur pour un ou plusieurs axes esclaves (23, 24) sur la base de la valeur de référence.

4. Procédé selon l'une des revendications précédentes 1 à 3, dans lequel chaque utilisateur comporte une liste d'émission (7, 11) et une liste de réception (8, 12) pour une communication déterministe.

5. Procédé selon l'une des revendications précédentes 1 à 4, dans lequel la deuxième plage d'un cycle de transmission pour la transmission de données non critiques à temps réel s'effectue selon un protocole Internet, de préférence un protocole TCP/IP.

6. Procédé selon l'une des revendications précédentes 1 à 5, dans lequel les données non critiques à temps réel sont des données d'une mise en service et/ou d'une maintenance d'une installation.

7. Procédé selon l'une des revendications précédentes 1 à 6, dans lequel les données non critiques à temps réel sont des données d'un appel de procédure distante ou Remote Procedure Call, notamment pour l'interrogation de données de production par un serveur de données d'un utilisateur du réseau de données commuté (1), les données de production étant par exemple une formule ou des paramètres de machine.

8. Système d'automatisation avec des utilisateurs d'un réseau de données commuté (1), la communication entre des utilisateurs du réseau de données commuté (1) s'effectuant par l'intermédiaire d'une ou plusieurs liaisons point à point dans des cycles de transmission synchrones entre eux et chacun des cycles de transmission étant divisé en une première plage pour la transmission de données critiques à temps réel et une deuxième plage pour la transmission de données non critiques à temps réel, et avec des moyens pour :
- l'acquisition d'une ou plusieurs valeurs réelles en synchronisation avec les cycles de communication par le premier utilisateur (2),
- la transmission d'un premier télégramme de données avec la ou les valeurs réelles par le premier utilisateur (2) au deuxième utilisateur (9) par l'intermédiaire du réseau de données commuté (1) dans la première plage d'un cycle de transmission,
- la détermination d'un écart de régulation à partir de la ou des valeurs réelles et d'une valeur de consigne du deuxième utilisateur (9) et la détermination d'une grandeur réglante à partir de l'écart de régulation par le deuxième utilisateur (9), et
- la transmission d'un deuxième télégramme de données par le deuxième utilisateur (9) au premier utilisateur (2) dans la première plage d'un cycle de transmission suivant avec la grandeur réglante.

9. Programme informatique comportant des moyens pour la mise en oeuvre d'un procédé selon l'une des revendications précédentes 1 à 7 lorsque le programme informatique est réalisé sur un système d'automatisation.
